# EUROPEAN PATENT SPECIFICATION

(11) **EP 2 122 896 B1**
(45) Date of publication and mention of the grant of the patent: **12.02.2014**
(21) Application number: 07871748.5
(22) Date of filing: 28.12.2007
(51) Int. Cl.: H04L 9/00, G06F 21/00

(54) **Detecting inappropriate activity by analysis of user interactions**
Erkennung von unangemessener Aktivität mittels Analyse von Benutzerinteraktionen
Détection d'une activité inappropriée par une analyse des interactions utilisateurs

(30) Priority: 29.12.2006 US 618309
(43) Date of publication of application: 25.11.2009
(73) Proprietor: Amazon Technologies, Inc., Reno, NV 89507 (US)
(72) Inventor: KHANNA, Richendra, Seattle, Washington 98144-2734 (US); KALENKOVICH, Eugene, Seattle, Washington 98144-2734 (US); CHOPRA, Rajiv, Seattle, Washington 98144-2734 (US)
(74) Representative: Grünecker, Kinkeldey, Stockmair & Schwanhäusser
(86) International application number: PCT/US2007/089109
(87) International publication number: WO 2008/083320

(56) References cited:
- US-A1- 2003 153 299
- US-A1- 2004 128 267
- US-A1- 2006 053 490
- US-A1- 2006 064 598
- VERWOERD T ET AL: "Intrusion detection techniques and approaches", COMPUTER COMMUNICATIONS, ELSEVIER SCIENCE PUBLISHERS BV, AMSTERDAM, NL, vol. 25, no. 15, 15 September 2002 (2002-09-15), pages 1356-1365, XP004353738, ISSN: 0140-3664, DOI: 10.1016/S0140-3664(02)00037-3
- Kazienko P; Dorosz P: "Intrusion Detection Systems (IDS) Part I - (network intrusions; attack symptoms; IDS tasks; and IDS architecture)", , 7 April 2003 (2003-04-07), XP002666437, Retrieved from the Internet: URL:http://www.windowsecurity.com/articles /intrusion_detection_systems_ids_part_i__n etwork_intrusions_attack_symptoms_ids_task s_and_ids_architecture.html?printversion [retrieved on 2011-12-28]

## Description

### TECHNICAL FIELD

The following disclosure relates generally to techniques for detecting inappropriate activity, such as to detect users engaged in inappropriate activities based on their interactions with a Web site or other electronic information service.

### BACKGROUND

In addition to providing access to information, the World Wide Web (or "Web") has increasingly become a medium that is used to search for, shop for and order items (such as products, services and/or information) that are for purchase, rent, lease, license, trade, evaluation, sampling, subscription to, etc. In many circumstances, a user can visit the Web site of a Web merchant (or a "Web store") or otherwise interact with a merchant, retailer or electronic marketplace that provides one or more items, such as to view information about the items, give an instruction to place an order for one or more items, and provide information needed to complete the purchased (*e.g*., payment and shipping information). After receiving an order for one or more items, a Web merchant then fulfills the order by providing the ordered items to the indicated recipient. The items may be products that are delivered electronically to a recipient (*e.g*., music downloaded over the Internet) or through physical distribution channels (*e.g*., paperback books shipped via a governmental postal service or private common carrier). The items may also be services that are provided either electronically (*e.g*., providing email service) or physically (*e.g*., performing cleaning services at the house of the purchaser). The order fulfillment process typically used by Web merchants for product items that are to be physically provided shares similarities with other item ordering services that ship ordered items (*e.g*., catalog-based shopping, such as from mail-order companies), such as to deliver ordered items from one or more physical distribution or fulfillment centers operated by or on behalf of the Web merchant.

While Web-based interactions with users provide a variety of benefits, Web merchants and other operators of Web sites also face various problems related to users that attempt to perform improper activities, such as fraudulent activities or other activities that are not allowed by a particular Web site operator. For example, unscrupulous parties may attempt to purchase items by unauthorized use of a credit card or other electronic payment system, such as when an unscrupulous party has come into possession of stolen or otherwise improperly acquired account information. Other unscrupulous parties may operate sham "storefronts" that are hosted by, or otherwise operated in affiliation with, a Web merchant or other electronic marketplace, and then attempt to obtain payment for items that are not delivered to a paying customer. In addition, unscrupulous parties may attempt to illegitimately obtain access to customer accounts maintained by and/or accessible via the Web site, such as to obtain confidential information for purposes of identity theft or other improper activities (*e.g*., transferring money from a bank account). Furthermore, unscrupulous parties may violate terms and conditions for using a Web site, such as by posting offensive or defamatory material, artificially manipulating prices (*e.g*., in the context of an auction site), distributing protected (*e.g*., copyrighted) materials and/or unwanted messages (*e.g*., spam), etc.

Improper activities create significant problems for both users of Internet services and the Internet services themselves. For example, a merchant may lose money when items are purchased by unauthorized use of a credit card or other electronic payment system. In addition, fraudulent or other improper activity may generate a significant number of calls (or other contacts) with customer service for the Internet services. Furthermore, improper activities such as identity theft may create significant difficulties for the victims of such crimes. In addition, even though an Internet service may not be liable for the costs of certain improper activities (*e.g*., account compromise by a guessed password, offensive behavior, etc.), users may lose trust in the Internet service, thereby reducing overall usage and causing corresponding financial losses (*e.g*., due to decreased advertising and/or sales revenues, etc.).

Verwoerd T. etal: "Intrusion detection techniques and approaches", Computer Communications Elsevier Science Publishers BV, vol. 25, no. 15, pages 1356-1365, describes an intrusion detection system architectural outline and an analysis of intrusion detection systems probe techniques. A number of common building functional blocks can be distinguished in intrusion detection systems: a sensor, probe; a monitor; a resolver; and a controller. The sensor and probe modules are for the most primitive data gathering components. The monitor components receive events from the sensors. These events are then correlated against the intrusion detection system behavior models. The resolver components receive suspicious reports from the monitors in the form of one or more alerts and determine the appropriate response. The controller facilitates component configuration and coordination. Two approaches to distinguish acceptable, normal system behavior from that which is abnormal can be distinguished: anomaly detection which attempts to model normal behavior and misuse detection which attempts to model abnormal behavior. In anomaly detection systems, for instance, threshold measure techniques, mean and standard deviation techniques, mulitvarate model techniques, Markov process model techniques and clustering analysis techniques have been implemented

Kazienko P; Dorosz P: "Intrusion Detection Systems (IDS) Part I - (network intrusions; attack symptoms; IDS tasks; and IDS architecture)" retrievable from the Internet gives an overview of several types of detectable attacks, symptoms that help in intrusion detection and describes intrusion detection system tasks, different architectures and concepts in this field.

It is the object of the present invention to improve the security of prior art systems.

This object is solved by the subject matter of the independent claims.

Preferred embodiments are defined by the dependent claims.

### BRIEF DESCRIPTION OF THE DRAWINGS

Figure 1 illustrates example interactions involving users of electronic information services.
Figure 2 is a block diagram illustrating a computing system suitable for executing an example embodiment of an Inappropriate Activity Detector system.
Figure 3 is a flow diagram of an example embodiment of an Inappropriate Activity Detector routine.
Figure 4 is a flow diagram of an example embodiment of an Assessment Test Manager routine.

### DETAILED DESCRIPTION

Techniques are described for detecting inappropriate activities based on interactions with Web sites and other electronic information services. In some embodiments, the techniques involve analyzing user interactions with an electronic information service in order to determine whether the user interactions are likely to reflect fraudulent activities by the user. Such user interactions may include requests for information from an electronic information service and/or information being supplied to the electronic information service, such as in the context of accessing information, conducting purchase transactions and other types of transactions, etc. In at least some embodiments, information about user interactions may be analyzed by applying one or more assessment tests that are each configured to assess one or more aspects of the interactions and to provide indications of whether those interaction aspects reflect inappropriate activities. If an analysis of one or more user interactions determines that a user is suspected of inappropriate activity, various actions may be taken to inhibit the inappropriate activity from continuing or recurring in the future. In at least some embodiments, the described techniques are automatically performed by an embodiment of an Inappropriate Activity Detector system, as described in greater detail below.

The described inappropriate activity detection techniques may be used in various manners in various embodiments. For example, in some embodiments the techniques are used in various ways to inhibit activities of users who attempt to perform inappropriate activities when interacting with a Web site or other electronic information service. Inappropriate users and activities may include, for example, users who attempt to purchase items from online merchants without providing valid payment, such as by using a credit card or other payment system (*e.g*., debit card, electronic funds transfer, etc.) without authorization. Inappropriate users and activities may further include users who attempt to fraudulently sell items (*e.g*., by obtaining payment for the sale of items but without delivering the items to the purchasers or other parties), such as via an auction or an electronic store. Other inappropriate users and activities may include fraudulent users who attempt to illegitimately gain access to confidential information of other users, user who attempt to impersonate other users, users who violate conditions or other standards of appropriate behavior (*e.g*., by using offensive language in postings, by sending spam or other unauthorized communications), etc.

Users engaged in inappropriate activities often exhibit identifiable patterns of interactions with an electronic information service that differ from the patterns of interactions exhibited by users engaged in appropriate (*e.g*., legitimate, non-fraudulent, etc.) activities. For example, users engaged in payment fraud (*e.g*., unauthorized use of credit card account information) on a target electronic information service (*e.g*., Web site) that sells items to customers tend not to "browse" or comparison shop when they make their fraudulent purchases. Instead, they tend to repeatedly and quickly perform a particular task (*e.g*., purchasing a high-demand item that may be easily resold for cash on a secondary market), possibly using different accounts for every transaction. As such, the interactions of a fraudulent user with the target electronic information service may exhibit particular patterns when purchasing an item, such as rapidly accessing information about the item and completing the purchase in as few steps or other operations as possible (*e.g*., by directly accessing a description of the item, indicating a desire to purchase the item, and providing payment information to complete the transaction). By comparison, a legitimate user purchasing the same item may spend more time, perform additional interactions, and/or perform such interactions more slowly when making the purchase (*e.g*., because they are inexperienced users, spending time reading reviews about the item, comparing the item to similar items, etc.).

Accordingly, in at least some embodiments, inappropriate activities may be detected based on an analysis of user interactions performed by automatically applying one or more assessment tests to information describing the user interactions. In particular, in at least some embodiments the assessment tests may analyze information about a sequence of multiple related interactions by a user (*e.g*., some or all interactions that occur during a particular user session, during a particular period of time, etc.), and attempt to determine whether the sequence of interactions matches any known patterns that are associated with inappropriate activities. In some embodiments, at least some of the assessment tests may further (or instead) analyze summary or aggregate information about a sequence of multiple related interactions by a user, such as information about a total amount of time taken to perform the sequence, average amounts of time between some or all of the interactions in the sequence, and various other information regarding the multiple interactions (*e.g*., a frequency of occurrence of at least some of the interactions, a variance of time intervals between at least some of the interactions, a quantity of at least some of the interactions, etc.). Assessment tests may have various forms in various embodiments, such as if-then rules and/or software modules (*e.g*., containing executable instructions, high level programming language code, scripting language code, etc.) or other executable code. In addition, an assessment test may use information about one or more user interactions as input, and provide as output an indication (*e.g*., a score, a flag, etc.) of a likelihood that the one or more user interactions reflect inappropriate activity. The results provided by multiple assessment tests applied to one or more user interactions may be combined in various ways (*e.g*., by summing, averaging, etc.) in order to make an overall determination of the likelihood that the user interactions reflect inappropriate activity.

The information describing user interactions that is analyzed to detect inappropriate activity may include information that is part of received requests for information (*e.g*., the name of a file or other electronically accessible resource being requested by a user) and/or information being supplied (*e.g*., the name and/or content of a file being uploaded or otherwise provided by a user). In addition, the information describing user interactions may also include information that is related to an interaction, such as header and other metadata information sent along with a received request for information or information being provided by a user, and other metadata information about the interactions (*e.g*., times of occurrence, information about how and from where the interactions are initiated, information about software and computing devices used as part of the interactions, etc.). Furthermore, the information describing user interactions may include information that is derived based on one or more user interactions, such as an average time between interactions, a total elapsed session time (*e.g*., the time between a user logging on and completing a transaction), etc.

As noted above, in some embodiments, inappropriate activities may be detected by analyzing user interactions with an electronic information service. In some embodiments, the electronic information service may log or otherwise record information about some or all user interactions, such as by storing the information in one or more log files. Then, all or some of the information in the user interactions log may be analyzed or otherwise processed in order to detect particular patterns of interactions that reflect inappropriate activity. In at least some embodiments, such analysis and processing may occur repeatedly, such as every ten minutes or every hour, to allow analysis of user interactions to occur in a near realtime manner. In such situations, part of the analysis (or pre-processing that occurs before the analysis) may include extracting information about particular users' sequences of interactions from a log that includes information about numerous concurrent user interactions.

If an inappropriate activity is detected, one or more actions may be taken to inhibit the continued and/or future occurrence of the inappropriate activity. For example, if the detected inappropriate activity is associated with a particular user (*e.g*., based as occurring on behalf of a particular user account), the actions may include automatically freezing the user's account(s) and/or notifying the user (*e.g*., based on a third-party having potentially gained illegitimate access to the account). In addition or alternatively, if the detected inappropriate activity is associated with an identified computing system (*e.g*., as originating from a particular network address), further interactions from the identified computing system may be blocked, suspended, and/or redirected. If the interactions are related to a transaction, the transaction may be automatically or manually blocked or delayed (*e.g*., to allow additional time to assess the interactions or the transaction), such as if the inappropriateness detection occurred in a near realtime manner with respect to the interactions or otherwise before the transaction is completed (*e.g*., before a purchased item is shipped). In some embodiments, the actions may also include providing information about the suspected inappropriate activity to one or more humans and/or other computing systems (*e.g*., an order processing system associated with an online store) for further review and/or special handling (*e.g*., delaying the shipping of an item until it is verified that a credit card account used to purchase the item was not used fraudulently).

For illustrative purposes, some embodiments are described below in which the described techniques are used in particular ways to inhibit particular types of inappropriate activities, and in which inappropriate activities are identified in various ways. However, it will be appreciated that the described techniques may be used in a wide variety of other situations, and thus the invention is not limited to the exemplary details provided.

As previously noted, in some embodiments the described inappropriate activity detection techniques may be used to inhibit activities of users who attempt to perform inappropriate activities when interacting with a Web site hosted by a Web server. For example, the Web server may provide information and/or services to users who are operating client Web browser applications. In such cases, a user may utilize a Web browser application to interact with the Web server via HTTP ("HyperText Transport Protocol") requests that include requests for information from the Web server and/or information to be provided to the Web server.

In some embodiments, information about HTTP requests received by Web server may be recorded (*e.g*., to a log file, database, memory, etc.) for purposes of inappropriate activity detection and other reasons. In particular, a given HTTP request includes various fields describing the request, including an indication of a desired action to be performed (*e.g*., to get information, to provide information to be processed, etc.), an identification of an electronic information resource to be accessed (*e.g*., the name of a file to be provided and/or executed by the Web server, etc.), request headers (*e.g*., an indication of the identity of the user and/or Web browser application that initiated the request, an indication of preferred languages and/or data encodings, one or more cookies, etc.), and an optional message body (*e.g*., including information being provided by the Web browser to the Web server). In some embodiments, some or all of the information contained in a given HTTP request may be logged, along with additional information, such as the source network address (*e.g*., IP address and/or port) of the computing system making the request, time and date of the request, volume of data included in the request (*e.g*., a number of bytes), time taken to process the request, etc.

In some embodiments, multiple HTTP requests received by a Web server may be analyzed to detect inappropriate activities on the part of users and/or computing systems associated with those requests. In some cases, the received HTTP requests may first be grouped into interaction sequences, which each include information describing one or more HTTP requests associated with a particular user, network address, and/or computing system. The information describing the one or more HTTP requests may include any or all properties of the HTTP requests themselves, as described above. In some cases, the properties of individual HTTP requests in a particular interaction sequence may alone be indicative of fraudulent activity. For example, in the context of an online store, if a user directly accesses the online store (rather than arriving at the online store via an electronic referral, such as from the results page of a search engine), and then accesses information about an item in a particular way (*e.g*., by manually entering a long unique identifier for the item rather than searching or browsing for the item), , the corresponding one or more HTTP requests may be identified as potentially indicative of fraudulent activity based on those activities typically being performed by fraudulent users.

In addition, information describing the one or more HTTP requests of a particular interaction sequence that is analyzed to detect inappropriate activity may include summary or aggregate information derived from a statistical or other analysis of multiple HTTP requests in an interaction sequence, such as total session time (*e.g*., time between when a user logged in and completed a transaction), average request frequency (*e.g*., number of requests per unit time), request interval (*e.g*., average time between requests), request patterns (*e.g*., a list, tree, graph, or other structure representing a path through the Web site, or a digest or other compressed representation of such a data structure), etc. In some cases, such derived information may be indicative of inappropriate activity. For example, in the context of a Web site that provides an online store, a fraudulent user is likely to know what item they wish to purchase, and as such they are likely to move quickly through the Web site to complete their fraudulent transaction. Accordingly, the fraudulent user may tend, as compared to legitimate users, to have a very short session time, a low average time per request, a low variance of time per request, and/or an unusual request pattern (*e.g*., searching for items by identifying numbers not ordinarily known or used by legitimate customers).

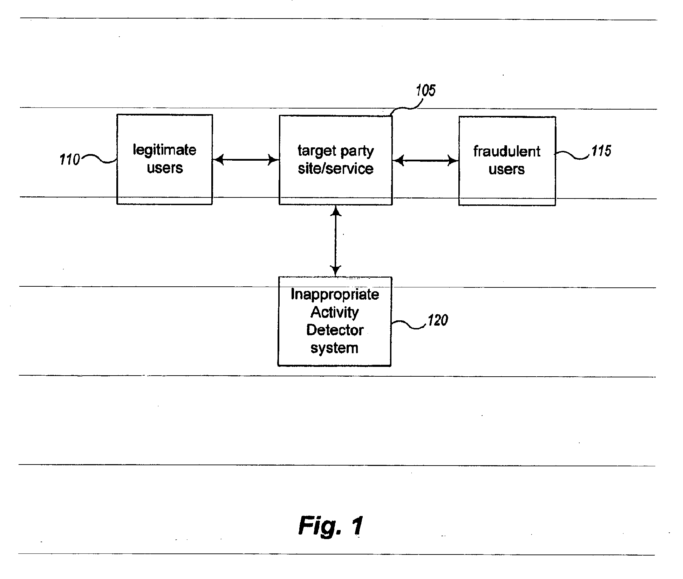

Figure 1 illustrates various types of interactions that may occur between users and electronic information services, such as Web sites and other services available via the Internet or other communications networks (*e.g*., private cellular or landline telephone networks). In this example, a target party site 105 offers one or more services (*e.g*., a Web store, an electronic marketplace, an auction service, online banking, payment processing, Web-based email, Web services, etc.) or other information that may be electronically accessed by legitimate users 110, as well as fraudulent users 115 who attempt to perform inappropriate activities at the target site. The legitimate users 110 and fraudulent users 115 use client software applications (*e.g*., Web browsers, not shown) executing on client devices (not shown) to access the services or information from the target party site 105. In order for a user to obtain such access, the user makes one or more information requests to the target party site (*e.g*., requests based on the HTTP protocol) for particular electronically accessible resources or other information available from the target party site 105.

In this example, the fraudulent users 115 may attempt to inappropriately interact with the target party site 105 in various ways. As described in more detail elsewhere, example inappropriate interactions may include attempts to purchase goods and/or services by fraudulent use of a payment system (*e.g*., by unauthorized use of a credit card), to fraudulently sell goods and/or services (*e.g*., by obtaining payment for items but not providing such items in return), etc.

In some embodiments, an automated Inappropriate Activity Detector system 120 may further be used to detect some or all of the inappropriate activities by at least some of the fraudulent users 115, and to inhibit those and related future inappropriate activities. Such a system may be, for example, executing on a target party's computing system(s) to analyze user interactions with the target party site 105, or may instead execute on one or more remote computing systems (*e.g*., to provide inappropriate activity detection services to one or more unaffiliated target parties, such as for a fee). Embodiments of the Inappropriate Activity Detector system 120 may analyze, for example, the interactions of legitimate users 110 and fraudulent users 115 with the target party site 105, such as to analyze all interactions of all users, or to instead analyze only selected user interactions (*e.g*., by randomly selecting a sample of users and/or interactions; by monitoring some or all interactions of particular users that are suspected of potentially being engaged in inappropriate activities; by monitoring some or all interactions after particular triggering events, such as after new customer users first open accounts and/or new sellers first begin to sell items; etc.). Additional details regarding activities of embodiments of the Inappropriate Activity Detector system 120 are included below.

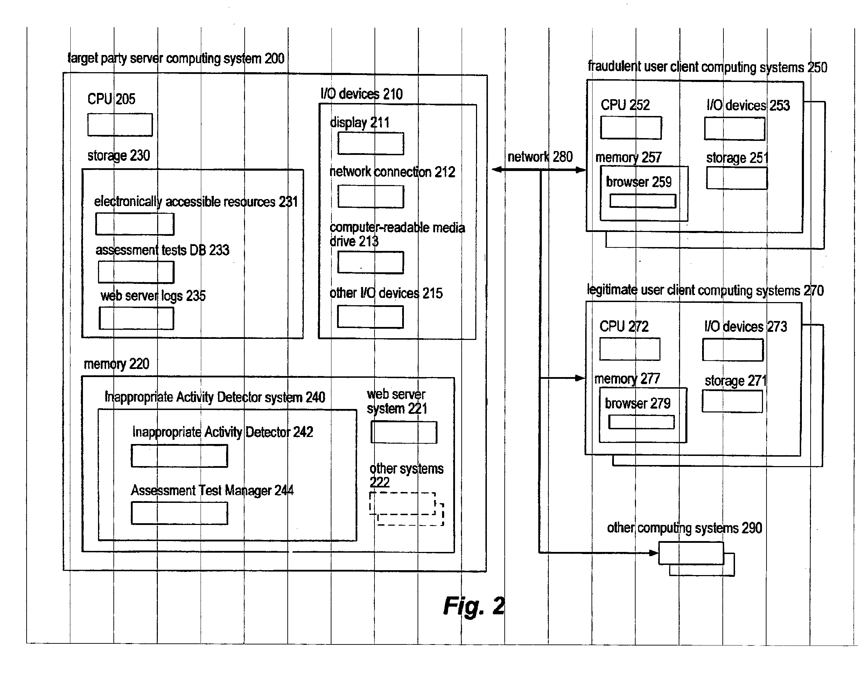

Figure 2 is a block diagram of an example server computing system 200 suitable for executing an embodiment of the Inappropriate Activity Detector system 240 in order to detect inappropriate activities with respect to one or more electronic information services. Figure 2 further illustrates various fraudulent user client computing systems 250 and legitimate user client computing systems 270 from which users may interact with the server computing system 200, such as with a Web server system 221, as well as optional other computing systems 290 (*e.g*., computing systems of various partners and affiliates, computing systems of third party entities with whom the Inappropriate Activity Detector system interacts to provide inappropriate activity detection functionality, etc.). In the illustrated embodiment, the server computing system 200 includes a CPU 205, various I/O components 210, storage 230, and memory 220. The I/O components include a display 211, network connection 212, computer-readable media drive 213 and other I/O devices 215 (*e.g*., a mouse, keyboard, etc.).

An embodiment of the Inappropriate Activity Detector system 240 is executing in memory 220, as is a Web server system 221 that provides one or more Web sites to users. In particular, fraudulent and legitimate users may interact with the Web server system 221 over the network 280 (*e.g*., via the Internet and/or the World Wide Web) via client-side browser applications 259 and 279 executing in memories 257 and 277 of the client computing systems 250 and 270, respectively, so as to send information requests for various electronically accessible resources 231 (*e.g*., Web pages, media content, etc.) on storage 230 or for other information, services, or functionality available via a Web site provided by Web server system 221. In some embodiments, fraudulent and legitimate users may further interact with the server computing system 200 in other ways, such as to initiate access to one or more online services available from one or more optional other systems 222 (*e.g*., a Web store system, an online banking system, a stock trading system, etc.). In this example, the Web server system 221 responds to information requests from users by providing the requested information to the request senders, and may further generate one or more logs 235 of the requests on storage 230.

In the illustrated embodiment, the Inappropriate Activity Detector system 240 operates to automatically assess at least some of the user interactions with the Web server system 221, although in other embodiments the Inappropriate Activity Detector system 240 may instead interact with other systems that provide access to electronically accessible resources, such as one or more Web server systems and/or other types of systems that execute on one or more other remote computing systems (*e.g*., on one or more of the other computing systems 290). The information about the requests to be analyzed may be obtained in various ways, such as based on interactions between the Inappropriate Activity Detector system 240 and the Web server system 221 to obtain information about requests (*e.g*., as the requests occur or otherwise before the requests are fulfilled, such as if the analysis is performed in realtime or near-realtime), or instead to analyze some or all requests after they are fulfilled based on retrieval of information about the requests from the logs 235.

The illustrated embodiment of the Inappropriate Activity Detector system 240 includes an Inappropriate Activity Detector module 242 and an Assessment Test Manager module 244. The Inappropriate Activity Detector module 242 analyzes information describing interactions performed by fraudulent and legitimate user client computing systems 250 and 270, and automatically determines whether the users of computing systems 250 and 270 are suspected of being engaged in inappropriate activities based on those interactions. In this embodiment, the Inappropriate Activity Detector module 242 analyzes information describing interactions by applying one or more assessment tests from the assessment tests database data structure 233, with each applied assessment test providing an indication of a degree of likelihood of inappropriate activity associated with one or more interactions being assessed. If the Inappropriate Activity Detector module 242 detects inappropriate activities related to one or more users and/or computing systems, it may take a variety of actions to inhibit such activities, including notifying one or more humans and/or other modules or computing systems.

In the illustrated embodiment, the Assessment Test Manager module 244 manages the collection of one or more assessment tests stored in the assessment tests database 233. In particular, the Assessment Test Manager module 244 may provide functionality that human users may utilize (*e.g*., via an interactive application, such as a Web browser) to create, update, modify, and/or delete assessment tests. In addition, the Assessment Test Manager module 244 may in some embodiments be configured to perform various automated tasks related to assessment tests, such as to create and/or update assessment tests based on data mining, machine learning, and/or statistical analyses of user interactions to identify factors associated with inappropriate activity. Such identified factors may then be incorporated into existing or automatically generated assessment tests for later use by the Inappropriate Activity Detector module 242.

It will be appreciated that the illustrated computing systems are merely illustrative and are not intended to limit the scope of the present invention. The computing system 200 may instead include multiple interacting computing systems or devices, and may be connected to other devices that are not illustrated, including through one or more networks such as the Internet, via the Web, or via private networks (*e.g*., mobile communication networks, etc). More generally, a server or client computing system or device may comprise any combination of hardware or software that can interact, including (without limitation) desktop or other computers, network devices, PDAs ("Personal Digital Assistants"), cellphones, wireless phones, pagers, electronic organizers, Internet appliances, television-based systems (*e.g*., using set-top boxes and/or personal/digital video recorders), and various other consumer products that include appropriate inter-communication capabilities. In addition, the functionality provided by the Inappropriate Activity Detector system may in some embodiments be distributed among various modules in various ways, and some of the functionality may instead not be provided as part of the Inappropriate Activity Detector system and/or other additional functionality may be available.

It will also be appreciated that, while various items are discussed or illustrated as being stored in memory or on storage while being used, these items or portions of them can be transferred between memory and other storage devices for purposes of memory management and data integrity. Alternatively, in other embodiments some or all of the software systems or modules may execute in memory on another device and communicate with the illustrated computing system via inter-computer communication. Some or all of the systems and/or data structures may also be stored (*e.g*., as software instructions or structured data) on a computer-readable medium, such as a hard disk, memory, a network, or a portable media article (*e.g*., a DVD or flash memory devices) to be read by an appropriate drive or via an appropriate connection. The systems and data structures may also be transmitted via generated data signals (*e.g*., by being encoded in a carrier wave or otherwise included as part of an analog or digital propagated signal) on a variety of computer-readable transmission mediums, including wireless-based and wired/cable-based mediums, and may take a variety of forms (*e.g*., as part of a single or multiplexed analog signal, or as multiple discrete digital packets or frames). Such computer program products may also take other forms in other embodiments. Accordingly, the present techniques may be practiced with other computer system configurations.

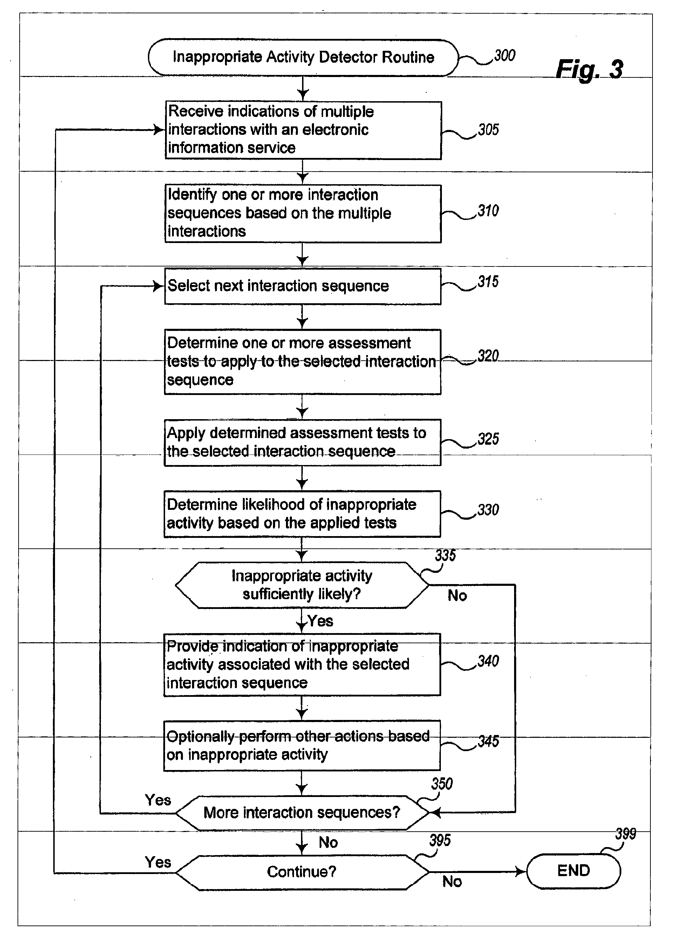

Figure 3 is a flow diagram of an example embodiment of an Inappropriate Activity Detector routine 300. The routine may, for example, be provided by execution of the Inappropriate Activity Detector module 242 of Figure 2, such as to automatically detect inappropriate activity based on an analysis of user interactions with an electronic information service. In this example embodiment, the analysis of user interactions is used to facilitate the inhibition of current and future inappropriate activities, but in other embodiments the analysis performed by the routine may be used for other purposes, such as for identifying different classes or types of users (*e.g*., expert versus novice users) for purposes such as marketing, targeted advertising, etc.

The illustrated embodiment of the routine 300 begins at step 305, where it receives indications of multiple interactions with an electronic information service, such as a Web server providing a Web site. In this embodiment, the indicated interactions are based on the contents of logs or other records maintained by the electronic information service. In one embodiment, the electronic information service stores a record of every interaction with a user at or near the time that such an interaction occurs. Then, the routine 300 receives or otherwise obtains all or some log entries, such as those stored during a specified time interval (*e.g*., those log entries stored during the last 10 minutes) and/or since the last time the routine analyzed log entries. In other embodiments, the indicated interactions may be received directly from the electronic information service, such as via a communications channel (*e.g*., a network connection, a pipe, etc.) in a realtime or substantially realtime manner with respect to the occurrence of the user interactions. In such cases, the electronic information service may send or otherwise transmit to the routine indications of interactions as they occur. In other embodiments, the indicated interactions may instead be received prior to the handling of such interactions by the electronic information service, such as by receiving the information from a proxy server that intercepts interactions as they flow between users and the electronic information service.

In step 310, the routine identifies one or more interaction sequences by one or more users based on the indicated multiple interactions. For example, if the interactions information received in step 305 includes information about interactions by multiple users over a period of time (*e.g*., from a log), the routine may parse or otherwise process the information to identify one or more interaction sequences that each include a collection of related interactions (*e.g*., based on originating from a particular user, computer system, and/or network address, and occurring during a particular session or period of time). In some cases, each interaction sequence may include all requests or other interactions made by a particular user between the time when the user initiated a sequence of interactions (*e.g*., logged in or otherwise began interactions) and when they performed some completion of the interactions (*e.g*., purchased an item, updated an account setting, logged out, etc.), such that each interaction sequence includes all interactions initiated by the user during a session or other logical connection and/or transaction.

In step 315, the routine selects the next interaction sequence, beginning with the first. In step 320, the routine then determines one or more assessment tests to apply to the selected interaction sequence. The determination of the one or more assessment tests to apply may include applying all assessment tests to all interaction sequences, or may instead be performed in other manners. For example, some assessment tests may be relevant only to interaction sequences that have at least a minimum number of interactions (*e.g*., more than one, more than two, etc.), such as assessment tests related to an average amount of time between interactions or to a total amount of time involved in performing all of the interactions. Furthermore, in some embodiments a particular interaction sequence may be selected for heightened scrutiny for various reasons, such as an associated user being previously identified as being potentially suspect and/or the interaction sequence including one or more interactions previously identified as particularly suspect, and if so an increased number of and/or more sophisticated assessment tests may be used. In other situations, a particular interaction sequence may instead be selected for lessened scrutiny (or no scrutiny if the interaction sequence is to be excluded from analysis), and if so less (or no) assessment tests may be selected. For example, in at least some embodiments, some or all information related to particular purchase transactions may be excluded (*e.g*., information about the particular items being purchased) from assessment for various reasons, and/or information about certain types of activities (*e.g*., after new seller accounts are created and/or existing seller accounts are changed) may be excluded from assessment.

In step 325, the routine applies the zero or more determined assessment tests to the selected interaction sequence. In some embodiments, each assessment test may process or otherwise inspect a given interaction sequence and provide a resulting indication of a degree of likelihood of the interaction sequence reflecting inappropriate activities, such as by providing a score (*e.g*., an integer), a probability (*e.g*., as a real number value between 0 and 1), or other indication (*e.g*., a Boolean value) of how likely it is that the given interaction sequence reflects inappropriate activity.

In step 330, the routine determines an overall likelihood of inappropriate activity for the selected interaction sequence based on the applied tests. If multiple assessment tests are applied, the indicated likelihoods of inappropriate activity provided by each assessment test may be combined in various ways. For example, if the provided indicated likelihoods are all numeric probabilities of inappropriate activity, the provided indicated likelihoods may be combined in various ways, such as by averaging them (possibly in a weighted manner, such as based on a predetermined designation of relative accuracies and/or strengths of various assessment tests). In other embodiments, the likelihoods indicated by multiple assessment tests may be combined and/or aggregated in other ways (*e.g*., by simple summing).

In step 335, the routine determines whether inappropriate activity is sufficiently likely, such as based on whether the overall likelihood of inappropriate activity and/or any individual assessment test's indicated likelihood of inappropriate activity is greater than a predetermined threshold. For example, in an embodiment where assessment tests provide a likelihood of inappropriate activity on a standardized scale (*e.g*., a number between 0 and 10, with a score of 10 reflecting a higher likelihood than a score of 0), multiple likelihoods provided by multiple assessment tests may be averaged and inappropriate activity may be determined to be sufficiently likely when a total average score higher than some threshold value (*e.g*., 7) is obtained. The threshold may be determined by humans (*e.g*., hand tuned) and/or learned by machine learning techniques. In other embodiments, the operation of steps 330 and 335 may be performed in other manners, such as to provide the indicated assessment test likelihood degrees to a neural network or other recognition and/or classification system (*e.g*., a Bayesian classifier) that has been trained or otherwise configured to recognize particular patterns of outputs provided by the assessment tests as reflecting (*e.g*., being highly correlated with) inappropriate activity.

If it is determined in step 335 that inappropriate activity is sufficiently likely, the routine continues to step 340 and provides an indication of an inappropriate activity associated with the selected interaction sequence. This may include notifying human operators (*e.g*., by sending an email, text message, or other communication) and/or other systems or modules that may take some action to inhibit the identified inappropriate activity, as described in more detail elsewhere.

In step 345, the routine optionally performs other actions based on the detected inappropriate activity. In some embodiments, the routine may be configured to in some cases take some of the inhibiting actions ordinarily taken by other entities (*e.g*., human operators), such as when inappropriate activity is determined to be extremely likely or severe, so as to attempt to immediately stop further inappropriate activities. If it is instead determined in step 335 that inappropriate activity is not sufficiently likely, or after step 345, the routine continues to step 350. In step 350, the routine determines whether there are more interaction sequences to analyze, and if so returns to step 315. If it is instead determined in step 350 that there are no more interaction sequences to analyze, the routine continues to step 395 where it determines whether to continue. If so, the routine returns to step 305, and if not ends at step 395.

In some embodiments, the illustrated Inappropriate Activity Detector routine 300 may be modified to operate in a realtime or substantially realtime manner. For example, in an embodiment where the routine receives indications of interactions prior to or near the time that such interactions are handled by the electronic information service, the routine may identify and assess interaction sequences as they occur.

Various additional details related to assessment tests and techniques for identifying inappropriate activities such as suspect communications are included in U.S. Application No. 11/539,076, filed October 5, 2006 and entitled "Detecting Fraudulent Activity By Analysis Of Information Requests,".

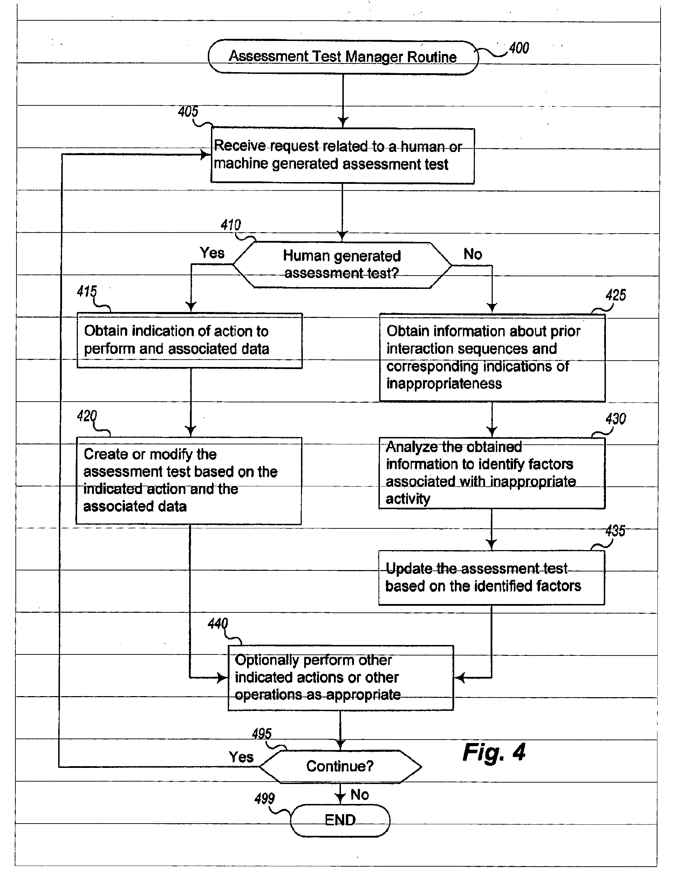

Figure 4 is a flow diagram of an example embodiment of an Assessment Test Manager routine 400. The routine may, for example, be provided by execution of the Assessment Test Manager module 244 of Figure 2, such as to provide functionality related to creating and/or updating assessment tests.

The routine begins at step 405, where it receives a request related to a human-generated or machine-generated assessment test. For example, the routine may provide interactive functionality such that human users may create and modify assessment tests interactively by communicating with the routine via a client program (*e.g*., a Web browser). In addition or alternatively, the routine may provide functionality for automatically generating and/or updating existing tests based on prior interaction sequences, such as prior interaction sequences that have been determined to reflect inappropriate activities.

In step 410, the routine determines whether the received request is related to a human-generated assessment test, and if so, continues with step 415. In step 415, the routine obtains an indication of an action to perform with respect to one or more assessment tests, along with any associated data. The indicated action may include operations related to the creation, update, modification, and/or management (*e.g*., a request to temporarily or permanently enable or disable an assessment test for future application) of assessment test(s). For example, an indicated action to create a new assessment test may include associated data that includes a script that is to be interpreted as part of applying the assessment test, a binary module (*e.g*., containing a procedure, function, class, etc.) to be executed as part of applying the assessment test, etc. In other embodiments, assessment tests may be predefined or partially predefined, requiring only one or more of factors, parameters, and/or other configurations to be specified to become operative. For example, a number of different "template" assessment tests may be available for human users to instantiate by providing the relevant factors or other tuning parameters. In such cases, an indicated action to create a new assessment test may include associated data that includes a specification of those factors, tuning parameters, or other configuration settings needed by the assessment test to perform its function. In addition, associated data may include metadata related to the cataloging and/or organization of assessment tests, such as operation time (*e.g*. the time ,that the test was created or last operated upon), user identity (*e.g*., of the user last operated upon the assessment test), test name or other identifier, comments (*e.g*., describing the operation of the assessment test in natural language), etc. In step 420, the routine performs the indicated action, such as by creating or modifying one or more indicated assessment tests. The assessment test information may be stored, for example, in the assessment tests database 233 or other data store for later retrieval.

If it is instead determined in step 410 that the received request is not related to a human-generated assessment test (and is therefore related to a machine-generated assessment test), the routine continues to step 425. In step 425, the routine obtains information about prior interaction sequences and corresponding indications of activity inappropriateness for those interaction sequences. For example, a given interaction sequence may include all of the requests made by a particular user during a session with an online merchant to perform a particular transaction (*e.g*., purchase an item), and the corresponding indication of inappropriateness may be that the interaction sequence correspond to an inappropriate activity (*e.g*., based on the particular transaction being subsequently determined to be fraudulent, such as due to the user using a credit card number that was later determined to be stolen or otherwise used without authorization). Alternatively, with respect to the prior example interaction sequence, the corresponding indication of inappropriateness may be that the interaction sequence does not correspond to an inappropriate activity (*e.g*., based on the transaction being completed without problem). The determinations of activity inappropriateness may be made in various ways, such as automatically (*e.g*., based on automated notifications of unauthorized use of a credit card number) and/or manually (*e.g*., based on human inspection or investigation).

In step 430, the routine analyzes the obtained information to attempt to identify one or more factors associated with inappropriate activity. Such analysis may include the automatic identification of factors of interaction sequences that are correlated with appropriate and/or inappropriate activity, such as factors that are statistical significant. As noted elsewhere, in some embodiments, various statistical, machine learning, and/or artificial intelligence techniques may be employed to identify factors associated with inappropriate activity. In step 435, if one or more relevant factors are identified in step 430, the routine then creates or updates one or more corresponding assessment tests based on the identified factors. For example, an assessment test that bases its determination of inappropriateness on the average time between interactions may be periodically updated and/or tuned to reflect changing conditions or technology used by fraudulent users (*e.g*., by automated robots utilized by the fraudulent users to perform transactions rapidly or in large numbers).

After steps 420 or 435, the routine continues to step 440, where it optionally performs other indicated actions or other operations as appropriate. Other indicated actions may include requests to determine and and/or provide assessment tests to various client systems or other routines (*e.g*., the Inappropriate Activity Detector routine 300).

In step 495, the routine determines whether to continue, and if so returns to step 405, and if not ends at step 499.

Those skilled in the art will also appreciate that in some embodiments the functionality provided by the routines discussed above may be provided in alternative ways, such as being split among more routines or consolidated into fewer routines. Similarly, in some embodiments the illustrated routines may provide more or less functionality than is described, such as when other illustrated routines instead lack or include such functionality respectively, or when the amount of functionality that is provided is altered. In addition, while various operations may be illustrated as being performed in a particular manner (*e.g*., in serial or in parallel) and/or in a particular order, those skilled in the art will appreciate that in other embodiments the operations may be performed in other orders and in other manners. Those skilled in the art will also appreciate that the data structures discussed above may be structured in different manners, such as by having a single data structure split into multiple data structures or by having multiple data structures consolidated into a single data structure. Similarly, in some embodiments illustrated data structures may store more or less information than is described, such as when other illustrated data structures instead lack or include such information respectively, or when the amount or types of information that is stored is altered.

From the foregoing it will be appreciated that, although specific embodiments have been described herein for purposes of illustration, various modifications may be made without deviating from the scope of the invention. Accordingly, the invention is not limited except as by the appended claims and the elements recited therein.

## Claims

1. A computer-implemented method for inhibiting inappropriate activities of users with an electronic information service, the method comprising:
receiving (305, 310, 315) information describing a sequence of multiple interactions of a user with the electronic information service, the multiple interactions including the user accessing multiple information resources available from the electronic information service, wherein the sequence of interactions may include a path of the multiple information resources being consecutively accessed by the user, wherein the path is associated with previous inappropriate activities;
analyzing (320, 325) the received information describing the sequence of interactions to determine (330) a likelihood of the user being engaged in inappropriate activity with respect to the electronic information service, wherein the analyzing includes automatically determining a likelihood of inappropriate activity based on at least one or more assessment tests being configured to identify the path in the received information; and
if the determined likelihood of the user being engaged in inappropriate activity exceeds a defined threshold, taking (340, 345) an action to inhibit the inappropriate activity.

2. The method of claim 1 wherein the received information describing the sequence of interactions includes an indication of a request of the user for an indicated information resource, wherein the indicated information resource is associated with previous inappropriate activities, and wherein the analyzing includes automatically determining inappropriate activity is occurring based on an assessment test being configured to identify the indicated information resource in the received information.

3. The method of claim 2 wherein the indicated information is at least one of a file to be provided by the electronic information service, an executable resource to be executed by the electronic information service and a search query.

4. The method of claim 1 wherein the received information describing the sequence of interactions includes summary information about at least some of the multiple interactions, and wherein the analyzing includes automatically determining the likelihood of inappropriate activity based on at least one or more assessment tests being configured to identify the summary information in the received information.

5. The method of claim 1 wherein the analyzing of the information about the sequence of interactions includes identifying a subset of the interactions that correspond to a predetermined type of activity, determining an amount of time associated with the subset of interactions, and automatically determining the likelihood of inappropriate activity based on one or more assessment tests configured to identity the determined amount of time for the predetermined type of activity.

6. The method of claim 1 wherein the received information describing the sequence of interactions includes at least one of a metadata associated with one or more received requests from the user that are part of the multiple interactions, and of data being uploaded by the user to the electronic information service as part of the multiple interactions.

7. The method of claim 1 wherein the received information describing the sequence of multiple interactions includes at least one of a network address associated with at least some of the multiple interactions, an indication of a client application associated with at least some of the multiple interactions, and an indication of a transaction being performed via at least some of the multiple interactions, and wherein the analyzing is based at least in part on the associated network address if included in the received information, and on the transaction if its indication is included in the received information.

8. The method of claim 1 wherein the analyzing of the received information about the sequence of multiple interactions includes providing at least some of the received information to one or more human operators for manual analysis.

9. The method of claim 1 wherein the receiving of the information describing the sequence of interactions includes obtaining information about multiple interactions with the electronic information service during a period of time and identifying the sequence of multiple interactions from the obtained information.

10. The method of claim 9 wherein the receiving of the information describing the sequence of multiple interactions further includes identifying multiple sequences of interactions from the obtained information that each correspond to a distinct user, and wherein the method further comprises automatically analyzing each of the identified sequences of interactions to determine whether the interactions are likely to correspond to inappropriate activity.

11. The method of claim 1 wherein the method is performed to detect one or more inappropriate activities in an electronic marketplace provided by the electronic information service, and wherein the inappropriate activities include at least one of a fraudulent purchase of an item and a fraudulent sale of an item.

12. A computer program for performing any of the methods of claims 1-11.

13. A computing device configured to inhibit inappropriate activities of users with an electronic information service, the device comprising:
means for receiving information describing a sequence of multiple interactions of a user with the electronic information service, the multiple interactions including the user accessing multiple information resources available from the electronic information service, wherein the sequence of interactions may include a path of the multiple information resources being consecutively accessed by the user, wherein the path is associated with previous inappropriate activities;
means for analyzing the received information describing the sequence of interactions to determine a likelihood of the user being engaged in inappropriate activity with respect to the electronic information service, wherein the analyzing includes automatically determining a likelihood of inappropriate activity based on at least one or more of the assessment tests being configured to identify the path in the received information; and
means for, if the determined likelihood of the user being engaged in inappropriate activity exceeds a defined threshold, taking an action to inhibit the inappropriate activity.

14. The computing device of claim 13 wherein the received information describing the sequence of interactions includes an indication of a request of the user for an information resource, wherein the indicated information resource is associated with previous inappropriate activities, and wherein the analyzing includes automatically determining if an inappropriate activity is occurring based on an assessment test being configured to identify the indicated information resource in the received information.

15. The computing device of claim 14 wherein the indicated information resource is at least one of a file to be provided by the electronic information service, an executable resource to be executed by the electronic information service, and a search query.

16. The computing device of claim 13 wherein the received information describing the sequence of interactions includes summary information about at least some of the multiple interactions, and wherein the analyzing includes automatically determining the likelihood of inappropriate activity based on at least one or more assessment tests being configured to identify the summary information in the received information.

17. The computing device of claim 13 wherein the analyzing of the received information about the sequence of interactions includes identifying a subset of the interactions that correspond to a predetermined type of activity, determining an amount of time associated with the subset of interactions, and automatically determining the likelihood of inappropriate activity based on one or more assessment tests being configured to identify the determined amount of time for the predetermined type of activity.

18. The computing device of claim 13 wherein the received information describing the sequence of interactions includes at least one of metadata associated with one or more received requests from the user that are part of the multiple interactions, and of data being uploaded by the user to the electronic information service as part of the multiple interactions.

19. The computing device of claim 13 wherein the received information describing the sequence of multiple interactions includes at least one of a network address associated with at least some of the multiple interactions, an indication of a client application associated with at least some of the multiple interactions, and an indication of a transaction being performed via at least some of the multiple interactions, and wherein the analyzing is based at least in part on the associated network address if included in the received information, on the associated client application is its indication is included in the received information, and on the transaction if its indication is included in the received information.

20. The computing device of claim 13 wherein the analyzing of the received information about the sequence of multiple interactions includes providing at least some of the received information to one or more human operators for manual analysis.

21. The computing device of claim 13 wherein the receiving of the information describing the sequence of interactions includes obtaining information about multiple interactions with the electronic information service during a period of time and identifying the sequence of multiple interactions from the obtained information.

22. The computing device of claim 21 wherein the receiving of the information describing the sequence of multiple interactions further includes identifying multiple sequences of interactions from the obtained information that each correspond to a distinct user, and further comprising means for automatically analyzing each of the identified sequences of interactions to determine whether the interactions are likely to correspond to inappropriate activity.

23. The computing device of claim 13 wherein the computing device is configured to detect one or more inappropriate activities in an electronic marketplace provided by the electronic information service, and wherein the inappropriate activities include at least one of a fraudulent purchase of an item, a fraudulent sale of an item, unauthorized access to an account for the electronic marketplace, and a violation of conditions for using the electronic marketplace.

## Patentansprüche

1. Computerimplementiertes Verfahren zum Unterbinden unangemessener Aktivitäten von Benutzern mit einem elektronischen Informationsdienst, wobei das Verfahren umfasst:
Empfangen (305, 310, 315) von Informationen, die eine Abfolge mehrerer Interaktionen eines Benutzers mit dem elektronischen Informationsdienst beschreiben, wobei die mehreren Interaktionen einschließen, dass der Benutzer auf mehrere Informations-Ressourcen zugreift, die über den elektronischen Informationsdienst verfügbar sind, die Abfolge von Interaktionen einen Pfad der mehreren Informationsressourcen einschließen kann, auf die von dem Benutzer aufeinanderfolgend zugegriffen wird, und der Pfad mit vorhergehenden unangemessenen Aktivitäten zusammenhängt;
Analysieren (320, 325) der empfangenen Informationen, die die Abfolge von Interaktionen beschreiben, um eine Wahrscheinlichkeit zu bestimmen (330), dass der Benutzer mit unangemessener Aktivität in Bezug auf den elektronischen Informationsdienst befasst ist, wobei das Analysieren einschließt, dass eine Wahrscheinlichkeit unangemessener Aktivität automatisch auf Basis wenigstens eines oder mehrerer Bewertungstests bestimmt wird, der/die so konfiguriert ist/sind, dass der Pfad in den empfangenen Informationen identifiziert wird; und
Ergreifen (340, 345) einer Maßnahme zum Unterbinden der unangemessenen Aktivität, wenn die bestimmte Wahrscheinlichkeit, dass der Benutzer mit unangemessener Aktivität befasst ist, einen festgelegten Schwellenwert übersteigt.

2. Verfahren nach Anspruch 1, wobei die empfangenen Informationen, die die Abfolge von Interaktionen beschreiben, eine Angabe einer Anforderung einer angegebenen Informationsressource durch den Benutzer enthalten, wobei die angegebene Informationsressource mit vorhergehenden unangemessenen Aktivitäten zusammenhängt und wobei das Analysieren einschließt, dass auf Basis eines Bewertungstests, der so konfiguriert ist, dass er die angegebene Informationsressource in den empfangenen Informationen identifiziert, automatisch festgestellt wird, dass unangemessene Aktivität stattfindet.

3. Verfahren nach Anspruch 2, wobei die angegebenen Informationen wenigstens eine durch den elektronischen Informationsdienst bereitzustellende Datei, eine durch den elektronischen Informationsdienst auszuführende ausführbare Ressource oder/und eine Suchabfrage sind.

4. Verfahren nach Anspruch 1, wobei die empfangenen Informationen, die die Abfolge von Interaktionen beschreiben, zusammenfassende Informationen über wenigstens einige der mehreren Interaktionen enthalten und das Analysieren einschließt, dass auf Basis wenigstens eines oder mehrerer Bewertungstests, der/die so konfiguriert ist/sind, dass die zusammenfassenden Informationen in den empfangenen Informationen identifiziert werden, automatisch die Wahrscheinlichkeit unangemessener Aktivität bestimmt wird.

5. Verfahren nach Anspruch 1, wobei das Analysieren der Informationen über die Abfolge von Interaktionen einschließt, dass eine Teilgruppe der Interaktionen identifiziert wird, die einem vorgegebenem Typ Aktivität entsprechen, ein Zeitmaß bestimmt wird, das mit der Teilgruppe von Interaktionen zusammenhängt, und auf Basis eines oder mehrerer Bewertungstests, der/die so konfiguriert ist/sind, dass das bestimmte Zeitmaß identifiziert wird, automatisch die Wahrscheinlichkeit unangemessener Aktivität bestimmt wird.

6. Verfahren nach Anspruch 1, wobei die empfangenen Informationen, die die Abfolge von Interaktionen beschreiben, wenigstens Metadaten, die mit einer oder mehreren empfangenen Anforderung/en von dem Benutzer zusammenhängen, die Teil der mehreren Interaktionen ist/sind, oder/und Daten enthalten, die von dem Benutzer als Teil der mehreren Interaktionen zu dem elektronischen Informationsdienst hochgeladen werden.

7. Verfahren nach Anspruch 1, wobei die empfangenen Informationen, die die Abfolge mehrerer Interaktionen beschreiben, wenigstens eine Netzwerkadresse, die mit wenigstens einigen der mehreren Interaktionen zusammenhängt, eine Angabe einer Client-Anwendung, die mit wenigstens einigen der mehreren Interaktionen zusammenhängt oder/und eine Angabe einer Transaktion enthalten, die über wenigstens einige der mehreren Interaktionen durchgeführt wird, und wobei das Analysieren wenigstens teilweise auf der zugehörigen Netzwerkadresse, wenn diese in den empfangenen Informationen enthalten ist, oder/und auf der Transaktion basiert, wenn deren Angabe in den empfangenen Informationen enthalten ist.

8. Verfahren nach Anspruch 1, wobei das Analysieren der empfangenen Informationen über die Abfolge mehrerer Interaktionen einschließt, dass wenigstens einige der empfangenen Informationen einem oder mehreren menschlichen Bearbeiter/n zur manuellen Analyse bereitgestellt werden.

9. Verfahren nach Anspruch 1, wobei das Empfangen der Informationen, die die Abfolge von Interaktionen beschreiben, einschließt, dass Informationen über mehrere Interaktionen mit dem elektronischen Informationsdienst während eines Zeitraums erfasst werden und die Abfolge mehrerer Interaktionen anhand der erfassten Interaktionen identifiziert wird.

10. Verfahren nach Anspruch 9, wobei das Empfangen der Informationen, die die Abfolge mehrerer Interaktionen beschreiben, des Weiteren einschließt, dass mehrere Abfolgen von Interaktionen aus den erfassten Informationen identifiziert werden, die jeweils einem bestimmten Benutzer entsprechen, und wobei das Verfahren des Weiteren umfasst, dass jede der identifizierten Abfolgen von Interaktionen automatisch analysiert wird, um festzustellen, ob es wahrscheinlich ist, dass die Interaktionen unangemessener Aktivität entsprechen.

11. Verfahren nach Anspruch 1, wobei das Verfahren durchgeführt wird, um eine oder mehrere unangemessene Aktivität/en auf einem elektronischen Marktplatz nachzuweisen, der durch den elektronischen Informationsdienst bereitgestellt wird, und wobei die unangemessenen Aktivitäten wenigstens einen betrügerischen Kauf eines Artikels oder/und einen betrügerischen Verkauf eines Artikels einschließen.

12. Computerprogramm zum Durchführen eines der Verfahren nach den Ansprüchen 1-11.

13. Computervorrichtung, die so konfiguriert ist, dass sie unangemessene Aktivitäten von Benutzern mit einem elektronischen Informationsdienst unterbindet, wobei die Vorrichtung umfasst:
eine Einrichtung zum Empfangen von Informationen, die eine Abfolge mehrerer Interaktionen eines Benutzers mit dem elektronischen Informationsdienst beschreiben, wobei die mehreren Interaktionen einschließen, dass der Benutzer auf mehrere Informations-Ressourcen zugreift, die über den elektronischen Informationsdienst verfügbar sind, die Abfolge von Interaktionen einen Pfad der mehreren Informationsressourcen einschließen kann, auf die von dem Benutzer aufeinanderfolgend zugegriffen wird, und der Pfad mit vorhergehenden unangemessenen Aktivitäten zusammenhängt;
eine Einrichtung zum Analysieren der empfangenen Informationen, die die Abfolge von Interaktionen beschreiben, um eine Wahrscheinlichkeit zu bestimmen (330), dass der Benutzer mit unangemessener Aktivität in Bezug auf den elektronischen Informationsdienst befasst ist, wobei das Analysieren einschließt, dass eine Wahrscheinlichkeit unangemessener Aktivität automatisch auf Basis wenigstens eines oder mehrerer Bewertungstests bestimmt wird, der/die so konfiguriert ist/sind, dass der Pfad in den empfangenen Informationen identifiziert wird; und
eine Einrichtung zum Ergreifen einer Maßnahme zum Unterbinden der unangemessenen Aktivität, wenn die bestimmte Wahrscheinlichkeit, dass der Benutzer mit unangemessener Aktivität befasst ist, einen festgelegten Schwellenwert übersteigt.

14. Computervorrichtung nach Anspruch 13, wobei die empfangenen Informationen, die die Abfolge von Interaktionen beschreiben, eine Angabe einer Anforderung einer Informationsressource durch den Benutzer enthalten, wobei die angegebene Informationsressource mit vorhergehenden unangemessenen Aktivitäten zusammenhängt und wobei das Analysieren einschließt, dass auf Basis eines Bewertungstests, der so konfiguriert ist, dass er die angegebene Informationsressource in den empfangenen Informationen identifiziert, automatisch festgestellt wird, ob unangemessene Aktivität stattfindet.

15. Computervorrichtung nach Anspruch 14, wobei die angegebenen Informationen wenigstens eine durch den elektronischen Informationsdienst bereitzustellende Datei, eine durch den elektronischen Informationsdienst auszuführende ausführbare Ressource oder/und eine Suchabfrage sind.

16. Computervorrichtung nach Anspruch 13, wobei die empfangenen Informationen, die die Abfolge von Interaktionen beschreiben, zusammenfassende Informationen über wenigstens einige der mehreren Interaktionen enthalten und das Analysieren einschließt, dass auf Basis wenigstens eines oder mehrerer Bewertungstests, der/die so konfiguriert ist/sind, dass die zusammenfassenden Informationen in den empfangenen Informationen identifiziert werden, automatisch die Wahrscheinlichkeit unangemessener Aktivität bestimmt wird.

17. Computervorrichtung nach Anspruch 13, wobei das Analysieren der empfangenen Informationen über die Abfolge von Interaktionen einschließt, dass eine Teilgruppe der Interaktionen identifiziert wird, die einem vorgegebenem Typ Aktivität entsprechen, ein Zeitmaß bestimmt wird, das mit der Teilgruppe von Interaktionen zusammenhängt, und auf Basis eines oder mehrerer Bewertungstests, der/die so konfiguriert ist/sind, dass das bestimmte Zeitmaß identifiziert wird, automatisch die Wahrscheinlichkeit unangemessener Aktivität bestimmt wird.

18. Computervorrichtung nach Anspruch 13 wobei die empfangenen Informationen, die die Abfolge von Interaktionen beschreiben, wenigstens Metadaten, die mit einer oder mehreren empfangenen Anforderung/en von dem Benutzer zusammenhängen, die Teil der mehreren Interaktionen ist/sind, oder/und Daten enthalten, die von dem Benutzer als Teil der mehreren Interaktionen zu dem elektronischen Informationsdienst hochgeladen werden.

19. Computervorrichtung nach Anspruch 13, wobei die empfangenen Informationen, die die Abfolge mehrerer Interaktionen beschreiben, wenigstens eine Netzwerkadresse, die mit wenigstens einigen der mehreren Interaktionen zusammenhängt, eine Angabe einer Client-Anwendung, die mit wenigstens einigen der mehreren Interaktionen zusammenhängt oder/und eine Angabe einer Transaktion enthalten, die über wenigstens einige der mehreren Interaktionen durchgeführt wird, und wobei das Analysieren wenigstens teilweise auf der zugehörigen Netzwerkadresse, wenn diese in den empfangenen Informationen enthalten ist, auf der zugehörigen Client-Anwendung, wenn ihre Angabe in den empfangenen Informationen enthalten ist, oder/und auf der Transaktion basiert, wenn deren Angabe in den empfangenen Informationen enthalten ist.

20. Computervorrichtung nach Anspruch 13, wobei das Analysieren der empfangenen Informationen über die Abfolge mehrerer Interaktionen einschließt, dass wenigstens einige der empfangenen Informationen einem oder mehreren menschlichen Bearbeiter/n zur manuellen Analyse bereitgestellt werden.

21. Computervorrichtung nach Anspruch 13, wobei das Empfangen der Informationen, die die Abfolge von Interaktionen beschreiben, einschließt, dass Informationen über mehrere Interaktionen mit dem elektronischen Informationsdienst während eines Zeitraums erfasst werden und die Abfolge mehrerer Interaktionen anhand der erfassten Interaktionen identifiziert wird.

22. Computervorrichtung nach Anspruch 21, wobei das Empfangen der Informationen, die die Abfolge mehrerer Interaktionen beschreiben, des Weiteren einschließt, dass mehrere Abfolgen von Interaktionen aus den erfassten Informationen identifiziert werden, die jeweils einem bestimmten Benutzer entsprechen, und die Vorrichtung des Weiteren eine Einrichtung umfasst, mit der jede der identifizierten Abfolgen von Interaktionen automatisch analysiert wird, um festzustellen, ob es wahrscheinlich ist, dass die Interaktionen unangemessener Aktivität entsprechen.

23. Computervorrichtung nach Anspruch 13, wobei die Computervorrichtung so konfiguriert ist, dass sie eine oder mehrere unangemessene Aktivität/en auf einem elektronischen Marktplatz erfasst, der durch den elektronischen Informationsdienst bereitgestellt wird, und wobei die unangemessenen Aktivitäten wenigstens betrügerischen Kauf eines Artikels oder/und einen betrügerischen Verkauf eines Artikels, nicht autorisierten Zugriff auf ein Konto für den elektronischen Marktplatz oder/und eine Verletzung von Bedingungen für die Nutzung des elektronischen Marktplatzes einschließen.

## Revendications

1. Procédé mis en oeuvre par un ordinateur pour empêcher des activités impropres d'utilisateurs avec un service d'information électronique, le procédé comprenant :
la réception (305, 310, 315) d'information décrivant une séquence d'interactions multiples d'un utilisateur avec le service d'information électronique, les interactions multiples comprenant l'accès par l'utilisateur à de multiples ressources d'information disponibles à travers le service d'information électronique, dans lequel la séquence d'interactions peut inclure un chemin d'accès des multiples ressources d'information auxquelles accède consécutivement l'utilisateur, dans lequel le chemin d'accès est associé à des activités impropres antérieures ;
l'analyse (320, 325) de l'information reçue qui décrit la séquence d'interactions afin de déterminer (330) une probabilité que l'utilisateur soit impliqué dans une activité impropre relative au service d'information électronique, dans lequel l'analyse comprend la détermination automatique d'une probabilité d'activité impropre sur base du fait qu'au moins un ou plusieurs tests d'évaluation sont configurés pour identifier le chemin d'accès dans l'information reçue ; et
si la probabilité déterminée que l'utilisateur soit impliqué dans une activité impropre dépasse un seuil défini, la mise en oeuvre (340, 345) d'une action pour empêcher l'activité impropre.

2. Procédé selon la revendication 1, dans lequel l'information reçue qui décrit la séquence d'interactions comprend une indication d'une requête de l'utilisateur pour une ressource d'information indiquée, dans lequel la ressource d'information indiquée est associée à des activités impropres antérieures, et dans lequel l'analyse comprend la détermination automatique qu'une activité impropre se produit sur base du fait qu'un test d'évaluation est configuré pour identifier la ressource d'information indiquée dans l'information reçue.

3. Procédé selon la revendication 2, dans lequel l'information indiquée est au moins une information parmi un fichier à fournir par le service d'information électronique, une ressource exécutable à exécuter par le service d'information électronique, et une requête de recherche.

4. Procédé selon la revendication 1, dans lequel l'information reçue qui décrit la séquence d'interactions comprend de l'information sommaire concernant au moins certaines des interactions multiples, et dans lequel l'analyse comprend la détermination automatique de la probabilité d'une activité impropre sur base du fait qu'au moins un ou plusieurs tests d'évaluation sont configurés pour identifier l'information sommaire dans l'information reçue.

5. Procédé selon la revendication 1, dans lequel l'analyse de l'information concernant la séquence d'interactions comprend l'identification d'un sous-ensemble des interactions qui correspondent à un type d'activité prédéterminé, la détermination d'une durée associée au sous-ensemble d'interactions, et la détermination automatique de la probabilité d'une activité impropre sur base d'un ou plusieurs tests d'évaluation configurés pour identifier la durée déterminée pour le type d'activité prédéterminé.

6. Procédé selon la revendication 1, dans lequel l'information reçue décrivant la séquence d'interactions comprend au moins une information parmi une métadonnée associée à une ou plusieurs requêtes reçues de l'utilisateur qui font partie des interactions multiples, et des données qui sont téléchargées par l'utilisateur vers le service d'information électronique au cours des interactions multiples.

7. Procédé selon la revendication 1, dans lequel l'information reçue décrivant la séquence d'interactions multiples comprend au moins une information parmi une adresse réseau associée à au moins certaines des interactions multiples, une indication d'une application client associée à au moins certaines des interactions multiples, et une indication qu'une transaction est mise en oeuvre via au moins certaines des interactions multiples, et dans lequel l'analyse est basée au moins en partie sur l'adresse réseau associée, si elle est incluse dans l'information reçue, et sur la transaction si son indication est incluse dans l'information reçue.

8. Procédé selon la revendication 1, dans lequel l'analyse de l'information reçue concernant la séquence d'interactions multiples comprend la provision d'au moins certaines des informations reçues à un ou plusieurs opérateurs humains pour une analyse manuelle.

9. Procédé selon la revendication 1, dans lequel la réception de l'information décrivant la séquence d'interactions comprend l'obtention d'information concernant des interactions multiples avec le service d'information électronique durant une période, et l'identification de la séquence d'interactions multiples à partir de l'information obtenue.

10. Procédé selon la revendication 9, dans lequel la réception de l'information décrivant la séquence d'interactions multiples comprend en outre l'identification de séquences d'interactions multiples à partir de l'information obtenue qui correspondent chacune à un utilisateur différent, et dans lequel le procédé comprend en outre l'analyse automatique de chacune des séquences d'interactions identifiées pour déterminer s'il est probable que les interactions correspondent à une activité impropre.

11. Procédé selon la revendication 1, dans lequel le procédé est mis en oeuvre pour détecter une ou plusieurs activités impropres sur un marché électronique pourvu par le service d'information électronique, et dans lequel les activités impropres comprennent au moins une activité parmi l'achat frauduleux d'un objet et la vente frauduleuse d'un objet.

12. Programme informatique pour mettre en oeuvre l'une quelconque des revendications 1 à 11.

13. Dispositif informatique configuré pour empêcher des activités impropres effectuées par des utilisateurs avec un service d'information électronique, le dispositif comprenant :
un moyen pour recevoir de l'information décrivant une séquence d'interactions multiples d'un utilisateur avec le service d'information électronique, les interactions multiples comprenant l'accès par l'utilisateur à de multiples ressources d'information disponibles à travers le service d'information électronique, dans lequel la séquence d'interactions peut inclure un chemin d'accès des multiples ressources d'information auxquelles accède consécutivement l'utilisateur, dans lequel le chemin d'accès est associé à des activités impropres antérieures ;
un moyen pour analyser l'information reçue qui décrit la séquence d'interactions afin de déterminer une probabilité que l'utilisateur soit impliqué dans une activité impropre relative au service d'information électronique, dans lequel l'analyse comprend la détermination automatique d'une probabilité d'activité impropre sur base du fait qu'au moins un ou plusieurs des tests d'évaluation sont configurés pour identifier le chemin d'accès dans l'information reçue ; et
un moyen pour, si la probabilité déterminée que l'utilisateur soit impliqué dans une activité impropre dépasse un seuil défini, mettre en oeuvre une action pour empêcher l'activité impropre.

14. Dispositif informatique selon la revendication 13, dans lequel l'information reçue qui décrit la séquence d'interactions comprend une indication d'une requête de l'utilisateur pour une ressource d'information, dans lequel la ressource d'information indiquée est associée à des activités impropres antérieures, et dans lequel l'analyse comprend la détermination automatique du fait qu'une activité impropre se produit sur base du fait qu'un test d'évaluation est configuré pour identifier la ressource d'information indiquée dans l'information reçue.

15. Dispositif informatique selon la revendication 14, dans lequel la ressource d'information indiquée est au moins une ressource parmi un fichier à fournir par le service d'information électronique, une ressource exécutable à exécuter par le service d'information électronique, et une requête de recherche.

16. Dispositif informatique selon la revendication 13, dans lequel l'information reçue qui décrit la séquence d'interactions comprend de l'information sommaire concernant au moins certaines des interactions multiples, et dans lequel l'analyse comprend la détermination automatique de la probabilité d'une activité impropre sur base du fait qu'au moins un ou plusieurs tests d'évaluation sont configurés pour identifier l'information sommaire dans l'information reçue.

17. Dispositif informatique selon la revendication 13, dans lequel l'analyse de l'information reçue concernant la séquence d'interactions comprend l'identification d'un sous-ensemble des interactions qui correspondent à un type d'activité prédéterminé, la détermination d'une durée associée au sous-ensemble d'interactions, et la détermination automatique de la probabilité d'une activité impropre sur base du fait qu'un ou plusieurs tests d'évaluation sont configurés pour identifier la durée déterminée pour le type d'activité prédéterminé.

18. Dispositif informatique selon la revendication 13, dans lequel l'information reçue décrivant la séquence d'interactions comprend au moins une information parmi des métadonnées associées à une ou plusieurs requêtes reçues de l'utilisateur qui font partie des interactions multiples, et des données qui sont téléchargées par l'utilisateur vers le service d'information électronique au cours des interactions multiples.

19. Dispositif informatique selon la revendication 13, dans lequel l'information reçue décrivant la séquence d'interactions multiples comprend au moins une information parmi une adresse réseau associée à au moins certaines des interactions multiples, une indication d'une application client associée à au moins certaines des interactions multiples, et une indication qu'une transaction est mise en oeuvre via au moins certaines des interactions multiples, et dans lequel l'analyse est basée au moins en partie sur l'adresse réseau associée, si elle est incluse dans l'information reçue, sur l'application client associée si son indication est comprise dans l'information reçue, et sur la transaction si son indication est incluse dans l'information reçue.

20. Dispositif informatique selon la revendication 13, dans lequel l'analyse de l'information reçue concernant la séquence d'interactions multiples comprend la provision d'au moins certaines des informations reçues à un ou plusieurs opérateurs humains pour une analyse manuelle.

21. Dispositif informatique selon la revendication 13, dans lequel la réception de l'information décrivant la séquence d'interactions comprend l'obtention d'information concernant des interactions multiples avec le service d'information électronique durant une période, et l'identification de la séquence d'interactions multiples à partir de l'information obtenue.

22. Dispositif informatique selon la revendication 21, dans lequel la réception de l'information décrivant la séquence d'interactions multiples comprend en outre l'identification de séquences d'interactions multiples à partir de l'information obtenue qui correspondent chacune à un utilisateur différent, et comprend en outre un moyen d'analyse automatique de chacune des séquences d'interactions identifiées pour déterminer s'il est probable que les interactions correspondent à une activité impropre.

23. Dispositif informatique selon la revendication 13, dans lequel le dispositif informatique est configuré pour détecter une ou plusieurs activités impropres sur un marché électronique pourvu par le service d'information électronique, et dans lequel les activités impropres comprennent au moins une activité parmi l'achat frauduleux d'un objet, la vente frauduleuse d'un objet, l'accès non autorisé à un compte pour le marché électronique, et une violation de conditions d'utilisation du marché électronique.
